## Europäisches Patentamt

## European Patent Office

## Office européen des brevets

(19)

(11) Veröffentlichungsnummer : **0 206 262 B1**

(12)　EUROPÄISCHE PATENTSCHRIFT

(45) Veröffentlichungstag der Patentschrift :
23.03.88

(21) Anmeldenummer : **86108379.8**

(22) Anmeldetag : **19.06.86**

(51) Int. Cl.⁴ : **C 03 B 5/23**, F 27 D 1/04, F 28 D 17/02

(54) Gitterung für stehende Regeneratorkammern von Glasöfen.

(30) Priorität : **28.06.85 AT 1941/85**

(43) Veröffentlichungstag der Anmeldung :
**30.12.86 Patentblatt 86/52**

(45) Bekanntmachung des Hinweises auf die Patenterteilung : **23.03.88 Patentblatt 88/12**

(84) Benannte Vertragsstaaten :
**AT BE DE FR GB IT LU NL**

(56) Entgegenhaltungen :
**EP-A- 0 093 472**
**EP-A- 0 107 229**
**DE-A- 3 317 876**
**FR-A- 2 449 659**
**CERAMIC ENGINEERING AND SCIENCE PROCEE-DINGS, Band 5, Nr. 1/2, Januar-Februar 1984, Seiten 34-48, Columbus, Ohio, US; G.P. SCHEIBLECHNER: "Chimney-type checker-block packing and latest developments in checkerwork design"**

(73) Patentinhaber : **Veitscher Magnesitwerke-Actien-Gesellschaft**
**Schubertring 10-12**
**A-1010 Wien (AT)**

(72) Erfinder : **Triessnig, Alois, Dipl.-Ing.**
**Jagdgasse 9/25**
**A-1100 Wien (AT)**

(74) Vertreter : **Kliment, Peter, Dipl.-Ing. Mag.-jur. et al**
**Singerstrasse 8**
**A-1010 Wien (AT)**

## Beschreibung

Die Erfindung betrifft eine Gitterung für stehende Regeneratorkammern von Glasöfen, bestehend aus einer Vielzahl nebeneinander angeordneter Kanäle, mit von unten nach oben gerichteter Frischluftströmung und alternierend dazu von oben nach unten gerichteter Abgasströmung, wobei zwischen den Kanälen Verwirbelungsöffnungen vorgesehen sind.

Es ist bekannt, zwischen den vertikalen Kanälen einer Gitterung relativ kleine Queröffnungen in den Kanalwänden vorzusehen, die dem Druckausgleich zwischen den Kanälen dienen.

Nach der AT-B-372 364 sind die Queröffnungen in den Kanalwänden als Verwirbelungsöffnungen gestaltet, die als Expansionsräume für die Gase wirken, wobei durch die entstehenden Strömungsstörungen der Wärmeübergang zwischen dem wärmespeichernden Wandmaterial und dem Strömungsmedium begünstigt wird. Dabei dienen zum Aufbau der Gitterung prismatische Hohlsteine aus feuerfestem Material mit achteckigem Außenquerschnitt und viereckigem Innenquerschnitt, welche einen durchgehenden Kanal aufweisen. Die Verwirbelungsöffnungen können dadurch ausgebildet sein, daß mindestens eine, vorzugsweise aber jede den Kanal begrenzende Wand mit einer sich bis zur Aufstandsfläche des Hohlsteines erstreckenden Öffnung versehen ist. Die Gitterung besteht aus Steinen gleicher Größe.

Die Erfindung geht von der Erkenntnis aus, daß neben der Heizfläche, die ein Gittersystem bei einem gegebenen Regeneratorvolumen für den Wärmeaustausch bietet, der Wärmeübergang in der Luftphase für den Wirkungsgrad des Regenerators von entscheidender Bedeutung ist, wogegen der Wärmeübergang in der Gasphase nur eine untergeordnete Rolle spielt.

Aufgabe der Erfindung ist es, den Aufbau des Regenerators an die in der Luftphase herrschenden Bedingungen anzupassen und dadurch den Wärmeübergang zu verbessern.

Nach der Erfindung wird dies dadurch erreicht, daß, bei einer Einrichtung der eingangs genannten Art, der Vertikalabstand je zweier übereinanderliegender Verwirbelungsöffnungen im untersten Gitterungsbereich am größten ist und sich gegen das obere Gitterungsende zu fortschreitend vermindert.

Die Wärme wird vom heißen Stein an die kalte Verbrennungsluft fast ausschließlich durch Konvektion übertragen. Der gesamte konvektive Wärmeübergang setzt sich zusammen aus der durch Saugen und/oder Drücken, also durch Kraftaufwand erzeugten, erzwungenen Konvektion und der auf einer Auftriebswirkung beruhenden freien Konvektion, die durch den Temperaturunterschied zwischen der Wand und dem Strömungsmedium hervorgerufen wird. Im unteren Bereich der Gitterung ist die Temperaturdifferenz zwischen Stein und Luft und damit die Auftriebswirkung groß. Die erfindungsgemäße Gitterung bietet im unteren Gitterungsbereich große, glatte Heizflächen dar, wodurch der durch die Auftriebswirkung hervorgerufene konvektive Wärmeübergang voll zum Tragen kommt.

Nach oben zu vermindert sich die Temperaturdifferenz zwischen Stein und Luft und damit verringert sich die Auftriebswirkung. Die erfindungsgemäße Gitterung bietet nach oben zu vermehrt Verwirbelungsöffnungen mit vielen querangeströmten Heizflächen dar, welche Strömungsstörungen bewirken. Die dadurch hervorgerufenen Turbulenzen begünstigen den konvektiven Wärmeübergang im oberen Bereich der Gitterung.

In der Gasphase des Regenerators erfolgt der Wärmeübergang vom Abgas auf den Stein hauptsächlich durch Strahlung, für deren Wirkung nur die Kanalweite von Belang ist. In Glasöfen ist das Abgas stark mit aggressiven Stäuben belastet, die die Tendenz haben, sich im unteren, kälteren Bereich der Gitterung niederzuschlagen und einen Ansatz zu bilden, welche Erscheinung als Alterung der Gitterung bezeichnet wird. Bei der erfindungsgemäßen Gitterung ist durch die großen, glatten Vertikalflächen im untersten Bereich der zusätzliche Vorteil einer geringeren Ansatzneigung gegeben.

In diesem Sinne kann es sich empfehlen, die unterste Gitterungslage von Verwirbelungsöffnungen freizuhalten.

Die genannten Vorteile kommen besonders dann zur Wirkung, wenn im Sinne einer Ausgestaltung der Erfindung der Vertikalabstand zweier übereinanderliegender Verwirbelungsöffnungen im untersten, mit Verwirbelungsöffnungen versehenen Gitterungsbereich bis zum Dreifachen und im obersten Gitterungsbereich bis zum 0,3-fachen des in der Gitterungsmitte vorliegenden Vertikalabstandes beträgt.

Die Gitterung wird in der Regel aus übereinanderliegenden Lagen feuerfester Steine aufgebaut, die durch ihre Formgebung die Verwirbelungsöffnungen ausbilden. Um mit einer geringen Anzahl verschiedener Steinformate das Auslangen zu finden, empfiehlt es sich, daß sich der Vertikalabstand zweier Verwirbelungsöffnungen über die Gitterungshöhe stufenweise vermindert.

Zum Aufbau der erfindungsgemäßen Gitterung eignen sich besonders die aus AT-B 365 545 und AT-B-372 364 bekannten prismatischen Hohlsteine aus feuerfestem Material mit achteckigem, vorzugsweise scharfkantigem Außenquerschnitt, viereckigem, gegebenenfalls abgerundete oder abgeschrägte Ecken aufweisendem Innenquerschnitt und einem durchgehenden zentralen Kanal, wobei die Verwirbelungsöffnungen durch eine bis zur Aufstandsfläche der Hohlsteine reichende Ausnehmung mindestens einer, vorzugsweise jeder Seitenwand des Hohlsteines gebildet sind.

Zur Erzielung einer hohen spezifischen Heizfläche empfiehlt es sich, den Hohlstein so zu gestalten, daß das Verhältnis des hydraulischen Durchmessers des Kanals zur Wandstärke des Steines einen zwischen 3 und 5 liegenden Wert ergibt. Der hydraulische Durchmesser ergibt sich dabei aus der Beziehung : vierfacher Kanalquerschnitt geteilt durch den Umfang des Kanalquerschnitts. Er beträgt bei Glasofengitterungen mit Vorteil 120 bis 200 mm. Beispielsweise beträgt die Wandstärke 40 mm.

Eine für die Verwirbelung der Verbrennungsluft günstige Öffnung ergibt sich, wenn bei den Hohlsteinen mittlerer bis geringster Höhe die Fläche der Ausnehmung in der Seitenwand des Hohlsteines das 0,2- bis 0,6-fache der Fläche der bezüglichen Innenwand des Kanals beträgt.

Ein besonders stabiler Gitterungsaufbau wird erreicht, wenn die Hohlsteine lagenweise versetzt übereinandergestellt sind, so daß auf je vier Hohlsteine einer Lage mittig ein Hohlstein der nächsthöheren Lage zu stehen kommt.

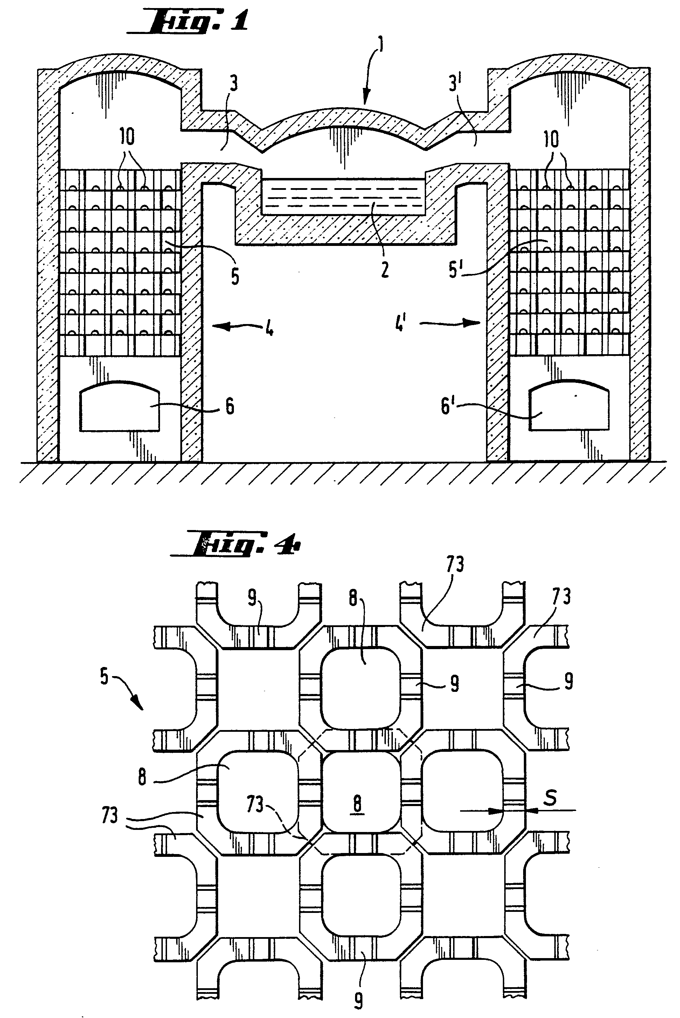

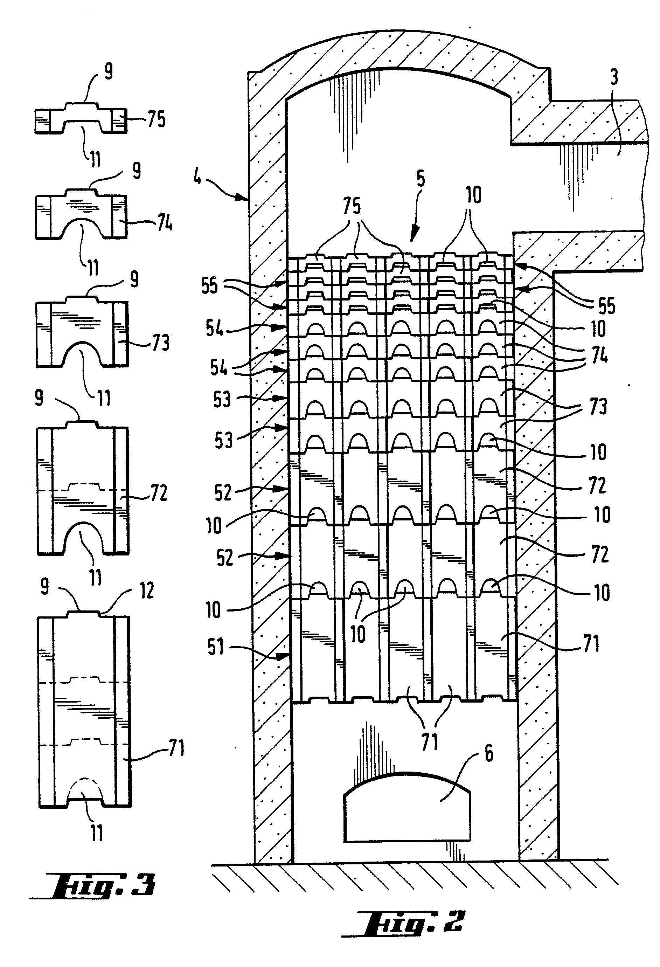

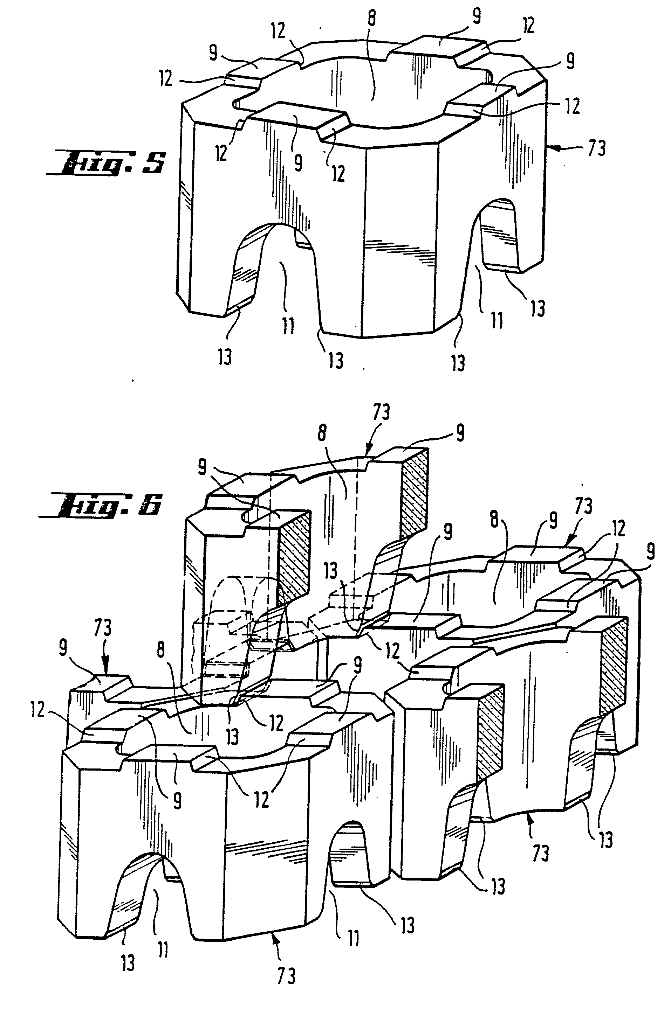

Die Erfindung wird an Hand der Zeichnungen näher erläutert. Dabei zeigen Fig. 1 das Schema eines Glasschmelzofens, Fig. 2 eine Regeneratorkammer mit erfindungsgemäßer Gitterung, Fig. 3 fünf Hohlsteinformate zum Aufbau der Gitterung nach Fig. 2, Fig. 4 die Draufsicht auf eine Lage einer erfindungsgemäßen Gitterung, Fig. 5 die Schrägansicht eines Hohlsteines nach Fig. 3 und Fig. 6 die Schrägansicht eines Teiles einer erfindungsgemäßen Gitterung.

Fig. 1 zeigt die mit feuerfestem Material ausgekleidete Wanne 1, die das Glasschmelzbad 2 enthält. Zu beiden Seiten der Wanne 1 führen Kanäle 3, 3′, in denen nicht dargestellte Brenner angeordnet sind, zu den Regeneratorkammern 4, 4′, in denen jeweils eine Gitterung 5, 5′ angeordnet ist. Im Betrieb wird zunächst die Wanne 1 von dem im Kanal 3′ angeordneten Brenner beheizt, wobei die Abgase über den Kanal 3 und durch die Gitterung 5 geführt werden und deren Besatzsteine erwärmen. Sind diese genügend aufgeheizt, wird umgeschaltet und die Beheizung der Wanne 1 erfolgt mittels des im Kanal 3 angeordneten Brenners, wobei die Verbrennungsluft über die Öffnung 6 in die Regeneratorkammer 4 eintritt und durch die Gitterung 5 unter Wärmeaufnahme streicht und die Abgase über den Kanal 3′ in die Regeneratorkammer 4′ eintreten, deren Gitterung 5′ unter Wärmeabgabe durchströmen und sie über die Öffnung 6′ verlassen. Nach dem Aufheizen der Gitterung 5′ wird wieder umgeschaltet, wobei nun die Frischluft durch die Öffnung 6′ in die Gitterung 5′ eintritt und die Abgase des im Kanal 3′ nun im Betrieb befindlichen Brenners nach Durchströmen und Erwärmen der Gitterung 5 durch die Öffnung 6 austreten.

Fig. 2 zeigt schematisch ein Beispiel einer erfindungsgemäßen Gitterung 5 einer Regeneratorkammer 4. Wie ersichtlich, besteht sie aus verschiedenen Lagen unterschiedlicher Höhe, wobei die Höhe der Lagen von unten nach oben stufenweise abnimmt. Gleich hohe Lagen sind mit gleichen Bezugsziffern bezeichnet. Man erkennt von unten nach oben eine Lage 51, zwei Lagen 52, zwei Lagen 53, drei Lagen 54 und vier Lagen 55. In jeder Lage, mit Ausnahme der untersten Lage 51, sind Verwirbelungsöffnungen 10 angeordnet.

Nach einer bevorzugten Ausführungsform der Erfindung kann die Gitterung 5 aus den in Fig. 3 dargestellten Hohlsteinformaten aufgebaut sein, wobei jede Lage, abgesehen von den Randzonen, aus Steinen mit jeweils gleichen Abmessungen besteht. Der höchste Hohlstein 71 dient zum Aufbau der untersten Lage 51. Der weniger hohe Hohlstein 72 wird für die nächsthöheren Lagen 52 verwendet. In den in der Gitterungsmitte befindlichen Lagen 53 wird der mittelhohe Hohlstein 73 eingesetzt. Der nächstniedrigere Hohlstein 74 kommt in die darüberliegenden Lagen 54. Die obersten Lagen 55 werden aus den niedrigsten Hohlsteinen 75 aufgebaut. Die Hohlsteine 72, 73, 74 und 75 sind mit Ausnehmungen 11 versehen, die in der Gitterung 5 die Verwirbelungsöffnungen 10 bilden, welche in der Gitterung 5 nach oben zu immer enger zusammenrücken. Bei dem für die unterste Lage 51 bestimmten Hohlstein 71 ist die Ausnehmung 11 gestrichelt dargestellt, um anzudeuten, daß sie in dieser Lage 51 auch entfallen kann. Da die Herstellung der sehr hohen Hohlsteine 71 und 72 unter Umständen Schwierigkeiten bereitet, kann man diese Formate, wie in Fig. 3 strichliert angedeutet, aus niedrigeren Steinelementen zusammensetzen, die ohne Versetzen turmartig übereinander gestellt werden.

Wie aus Fig. 3 ersichtlich, unterscheiden sich die Hohlsteine 71, 72, 73, 74 und 75 durch die Steinhöhe, weisen jedoch im Prinzip eine gleichartige Konfiguration auf. Daher wird zu deren Erläuterung, die in der Folge an Hand der Fig. 4, 5 und 6 vorgenommen wird, der mittelhohe Hohlstein 73 herangezogen.

Der Hohlstein 73 weist ebenso wie die Hohlsteine 71, 72, 74 und 75 eine achteckigen äußere Umrißlinie, einen im Querschnitt viereckigen, zentralen, durchgehenden Kanal 8 und eine im wesentlichen gleichbleibende Wandstärke S auf. Werden die Hohlsteine 73 lagenweise versetzt aufeinander geschichtet, so entstehen vertikale Kanäle, die in einer Lage durch die Innenflächen der Kanäle 8 der Hohlsteine 73 und in der jeweils nächsten Lage durch die Außenflächen von vier aneinander angrenzenden Hohlsteinen 73 gebildet sind. Der Hohlstein 73 ist mit Ausnehmungen 11 versehen, die sich beim gezeigten Beispiel von jeder der vier den Kanal 8 des Hohlsteines 73 begrenzenden Innenflächen bis zur Außenfläche des Hohlsteines 73 erstrecken und die an der Aufstandsfläche des Hohlsteines 7 offen sind. Diese Ausnehmungen 11 bilden in der Gitterung 5 die Verwirbelungsöffnungen 10.

Um den Aufbau der Gitterung 5 zu erleichtern und zu sichern, sind an der Deckfläche eines jeden Steines 73 vier sich in Richtung der Hauptachsen dieser Fläche erstreckende Erhebungen 9 vorgesehen. Diese Erhebungen 9 sind trapezförmig ausgebildet, wobei deren schräge Flächen 12 mit den schrägen Flächen 13 korrespondieren, die den unteren Randbereich der Ausnehmungen 11 bilden. Auf diese Weise wird ein stabiler Aufbau der Gitterung 5 sichergestellt, was die Anwendung der erwähnten dünnen Wandstärke S zuläßt.

Für die Besatzsteine der erfindungsgemäßen Gitterung 5 können alle für Gittersteine in Betracht kommende feuerfeste Materialien angewendet werden. Als feuerfeste Materialien eignen sich besonders Magnesia, Chromerz, Magnesiumaluminiumspinell, Tonerde und Mischungen dieser Stoffe sowie Forsterit oder Chamotte. Auch Sinter- oder Schmelzkornmaterialien aus den genannten Mischungen, z. B. aus Magnesiachromit, können gewünschtenfalls verwendet werden.

**Patentansprüche**

1. Gitterung für stehende Regeneratorkammern von Glasöfen, bestehend aus einer Vielzahl nebeneinander angeordneter Kanäle, mit von unten nach oben gerichteter Frischluftströmung und alternierend dazu von oben nach unten gerichteter Abgasströmung, wobei zwischen den Kanälen Verwirbelungsöffnungen vorgesehen sind, dadurch gekennzeichnet, daß der Vertikalabstand je zweier übereinanderliegender Verwirbelungsöffnungen (10) im untersten Gitterungsbereich (51) am größten ist und sich gegen das obere Gitterungsende zu fortschreitend vermindert.

2. Gitterung nach Anspruch 1, dadurch gekennzeichnet, daß die unterste Gitterungslage (51) von Verwirbelungsöffnungen (10) frei ist.

3. Gitterung nach Anspruch 1 oder 2, dadurch gekennzeichnet, daß der Vertikalabstand zweier übereinanderliegender Verwirbelungsöffnungen (10) im untersten, mit Verwirbelungsöffnungen (10) versehenen Gitterungsbereich (51, 52) bis zum Dreifachen und im obersten Gitterungsbereich (55) bis zum 0,3-fachen des in der Gitterungsmitte (53) vorliegenden Vertikalabstandes beträgt.

4. Gitterung nach einem der Ansprüche 1 bis 3, dadurch gekennzeichnet, daß sich der Vertikalabstand zweier Verwirbelungsöffnungen (10) über die Gitterungshöhe stufenweise vermindert.

5. Gitterung nach einem der Ansprüche 1 bis 4, dadurch gekennzeichnet, daß sie aus über die Gitterungshöhe von unten nach oben abnehmende Höhe besitzenden prismatischen Hohlsteinen (71, 72, 73, 74, 75) aus feuerfestem Material mit achteckigem, vorzugsweise scharfkantigem Außenquerschnitt, viereckigem, gegebenenfalls abgerundete oder abgeschrägte Ecken aufweisendem Innenquerschnitt und einem durchgehenden, zentralen Kanal (8) aufgebaut ist, wobei die Verwirbelungsöffnungen (10) durch eine bis zur Aufstandsfläche der Hohlsteine reichende Ausnehmung (11) mindestens einer, vorzugsweise jeder Seitenwand des Hohlsteines gebildet sind.

6. Gitterung nach Anspruch 5, dadurch gekennzeichnet, daß bei einem hydraulischen Durchmesser des Hohlsteines (71, 72, 73, 74, 75) von 120 bis 200 mm das Verhältnis des hydraulischen Durchmessers des Kanals (8) zur Wandstärke (S) des Hohlsteines einen zwischen 3 und 5 liegenden Wert ergibt, wobei der hydraulische Durchmesser sich definieren läßt als der vierfache Kanalquerschnitt geteilt durch den Umfang des Kanalquerschnitts.

7. Gitterung nach Anspruch 5 oder 6, dadurch gekennzeichnet, daß bei den Hohlsteinen (73, 74, 75) mittlerer bis geringster Höhe die Fläche der Ausnehmung (11) in der Seitenwand des Hohlsteines das 0,2- bis 0,6-fache der Fläche der bezüglichen Innenwand des Kanals (8) beträgt.

8. Gitterung nach einem der Ansprüche 5 bis 7, dadurch gekennzeichnet, daß die Hohlsteine (71, 72, 73, 74, 75) lagenweise versetzt übereinandergestellt sind.

**Claims**

1. Checkerwork for vertical regenerator chambers of glass furnaces comprising a multitude of parallel passages providing for fresh air flow from bottom to top, and alternately, for flue gas flow from top to bottom, with turbulence openings between the passages, characterized in that the vertical distance between any two superjacent turbulence openings (10) is largest in the lower region of the checkerwork (51), and decreases gradually towards the upper region of the checkerwork.

2. Checkerwork according to claim 1, characterized in that the bottom course (51) of the checkerwork is free of turbulence openings (10).

3. Checkerwork according to claims 1 and 2, characterized in that the vertical distance between any two superjacent turbulence openings (10) in the lowest checkerwork region (51, 52) which is provided with turbulence openings (10) is up to three times, and in the upper checker region (55) up to 0.3 times the vertical distance prevailing in the central checkerwork region (53).

4. Checkerwork according to claims 1 to 3, characterized in that the vertical distance between any two superjacent turbulence openings (10) decreases gradually upwards across the height of the checkerwork.

5. Checkerwork according to claims 1 to 4, characterized in that the checkerwork comprises prismatic hollow bricks (71, 72, 73, 74, 75) from refractory material, the bricks having an octogonal, preferably sharp-edged outer cross section, a tetragonal inner cross section, optionally with rounded or bevelled corners, and a central vertical through passage (8), the height of such bricks diminishing from the bottom to the top course of the checkerwork, and the turbulence openings (10) being formed by recessed passages (11) in at least one, preferably every side wall of the hollow brick, such recessed passages extending to the bottom surface of the hollow brick.

6. Checkerwork according to claim 5, characterized in that the ratio between the hydraulic diameter of the through passage (8) to the wall thickness (S) of the hollow brick is between 3 and 5, the hydraulic diameter in the hollow brick (71, 72, 73, 74, 75) being between 120 and 200 mm, and the hydraulic diameter being defined by the relationship : four times the through passage cross section divided by the periphery of the through passage cross section.

7. Checkerwork according to claim 5 or 6, characterized in that the area of the recessed passage (11) in the side wall of hollow bricks of medium or low height (73, 74, 75) is 0.2 to 0.6 times the area of a respective inner wall defining the through passage (8).

8. Checkerwork according to claims 5 to 7, characterized in that the hollow bricks (71, 72, 73, 74, 75) are superposed in such a way that the bricks are staggered from the bricks in the adjacent course.

## Revendications

1. Empilage pour des chambres de régénérateurs verticales de fours de verrerie, constitué d'une multitude de canaux parallèles avec un courant d'air frais circulant de bas en haut et en alternance, un courant de gaz rejetés circulant de haut en bas, des orifices de tourbillonnement étant prévus entre les canaux, caractérisé en ce que l'écart vertical entre deux orifices de tourbillonnement (10) superposés est le plus grand dans la partie de l'empilage la plus basse, et qu'il diminue progressivement vers l'extrémité supérieure de l'empilage.

2. Empilage selon la revendication 1, caractérisé en ce que la couche de l'empilage la plus basse (51) est libre d'orifices de tourbillonnement.

3. Empilage selon les revendications 1 ou 2 caractérisé en ce que l'écart vertical entre deux orifices de tourbillonnement superposés, dans la partie de l'empilage munie d'orifices de tourbillonnement (10) la plus basse (51, 52) est jusqu'à trois fois plus grand et dans la partie de l'empilage la plus élevée (55) jusqu'à 0,3 fois plus grand que l'écart vertical situé au milieu de l'empilage (53).

4. Empilage selon une des revendications 1 à 3, caractérisé en ce que l'écart vertical entre deux orifices de tourbillonnement (10) diminue, par couches, en commençant de la base vers le sommet.

5. Empilage selon une des revendications 1 à 4, caractérisé en ce qu'il est construit avec des briques creuses prismatiques (71, 72, 73, 74, 75), en matériau réfractaire, présentant une section transversale extérieure octogonale et de préférence à arêtes vives, une section transversale intérieure quadrangulaire à angles éventuellement arrondis ou en biseau et un canal (8) central continu, les orifices de tourbillonnement (10) étant formés par une cavité (11) au moins d'une paroi et de préférence de chaque paroi de la brique creuse, cette cavité s'étendant jusqu'à la surface de base de la brique creuse ; ces briques creuses, en commençant de la base vers le sommet, ont une hauteur qui diminue de bas en haut.

6. Empilage selon la revendication 5 caractérisé en ce que, étant donné un diamètre hydraulique de la brique creuse (71, 72, 73, 74, 75) de 120 à 200 mm, le rapport du diamètre hydraulique du canal (8) par rapport à l'épaisseur de la paroi (S) de la brique creuse est compris entre 3 et 5, le diamètre hydraulique se laissant définir comme étant quatre fois la section du canal divisé par la circonférence de la section du canal.

7. Empilage selon les revendications 5 ou 6 caractérisé en ce que pour les briques creuses (73, 74, 75), ayant une taille moyenne à minimale, la surface de la cavité (11) dans la paroi de la brique creuse correspond à 0,2 jusqu'à 0,6 fois la surface de la paroi intérieure du canal (8).

8. Empilage selon une des revendications 5 à 7 caractérisé en ce que les briques creuses (71, 72, 73, 74, 75) sont posées les unes sur les autres, par couches, et intercalées.

## Fig. 1

## Fig. 4

**Fig. 3**

**Fig. 2**

*Fig. 5*

*Fig. 6*